# EUROPEAN PATENT APPLICATION

(11) **EP 4 663 316 A1**
(43) Date of publication of application: **17.12.2025**
(21) Application number: 24194070.9
(22) Date of filing: 12.08.2024
(51) Int. Cl.: B09B 3/40, C22B 1/00, C22B 1/02, C22B 5/10, C22B 7/00, C22B 23/02, H01M 10/54, B09B 101/16

(54) **METHOD FOR RECYCLING WASTE LITHIUM-ION SECONDARY BATTERY AND RAW MATERIAL FOR LITHIUM-ION SECONDARY BATTERY POSITIVE ELECTRODE MATERIAL OBTAINABLE THEREBY**

(30) Priority: 12.06.2024 KR 20240076286
(71) Applicant: AK tree Co., Ltd, Seoul 06164 (KR); Libus987 Inc, Houston, TX 77036 (US)
(72) Inventor: AHN, Hyo Soo, 44784 Nam-gu, Ulsan (KR); KIM, Eun Jung, 22009 Yeonsu-gu, Incheon (KR)
(74) Representative: Beck & Rössig European Patent Attorneys

(57) **Abstract**

An objective of the present invention is to provide a method for recycling a waste lithium-ion secondary battery, the method capable of recovering a raw material for a positive electrode material from a waste lithium ion secondary battery in an economical and eco-friendly manner, and powder including a valuable material component obtainable thereby. In order to achieve the above-described object, the method for recycling a waste lithium-ion secondary battery is characterized by including (a) loading an object to be heat-treated, which is at least a part of a waste lithium-ion secondary battery including a positive electrode material, into a heat-treatment furnace, (b) increasing the temperature inside the heat-treatment furnace to a range of 200 °C to 400 °C, (c) maintaining the increased temperature, and (d) discharging first powder produced after the completion of the heat treatment of the waste lithium-ion secondary battery, wherein the first powder includes valuable metal powder containing a valuable metal composition of the positive electrode material.

## Description

### BACKGROUND OF THE INVENTION

### 1. Field of the Invention

The present invention relates to a method for recycling a waste lithium-ion battery and powder including a valuable material component obtainable thereby, and more particularly, to a recycling method of heat-treating a waste lithium-ion secondary battery at a low temperature and powder recovered thereby.

### 2. Description of the Related Art

As the automobile industry transitions from internal combustion engine vehicles to electric vehicles, Europe and China, which are the global growth axes of electric vehicles and secondary batteries, are promoting to expand the supply of electric vehicles and secure competitiveness through carbon dioxide regulations and eco-friendly vehicle road maps. Accordingly, it is expected that the global electric vehicle market will grow rapidly.

Since electric vehicle batteries are typically discarded after use for 5 years to 10 years, it is expected that the waste battery market will also be in full swing. The amount of electric vehicle waste batteries generated globally is expected to reach about 1.6 million tons up to 2030, and various countries around Europe have made large investment for the development of a process of recovering valuable metals from waste batteries.

Unlike reuse, the waste battery recycling industry recovers valuable metals from waste batteries and recycles the valuable metals as raw materials, making it possible to solve environmental problems and stably secure valuable resources at the same time.

In general, waste battery recycling is performed by discharging, dismantling, and grinding waste batteries and then extracting valuable metals through a wet smelting process or a dry smelting process, and the dry smelting process which is suitable for mass treatment and has a high recovery rate has attracted attention.

In the dry smelting, powder obtained through the grinding is heated to a high temperature to remove an organic compound and a polymer component included in the ground powder, and then ground again to extract valuable metals using a strong acid in a wet manner.

The above-described dry smelting process requires a lot of time and many devices for discharge and grinding, and also requires complicated processes afterwards, making it less economical, and a product discharged after high-temperature heating contains a large amount of impurities, which lowers the extraction rate of valuable components obtainable from the whole powder, and is present in a bulky state, and thus, requires regrinding and the use of a strong acid in order to extract valuable components therefrom, which raises environmental problems.

### SUMMARY OF THE INVENTION

An objective of the present invention is to provide a method for recycling a waste lithium-ion secondary battery, the method capable of recovering a raw material for a positive electrode material from a waste lithium-ion secondary battery in an economical and eco-friendly manner, and powder including a valuable material component obtainable thereby.

According to an embodiment of the invention, there is provided a method for recycling a waste lithium-ion secondary battery, the method characterized by including (a) loading an object to be heat-treated, which is at least a part of a waste lithium-ion secondary battery including a positive electrode material, into a heat-treatment furnace, (b) increasing the temperature inside the heat-treatment furnace to a range of 200 °C to 400 °C, (c) maintaining the increased temperature, and (d) discharging first powder produced after the completion of the heat treatment of the waste lithium-ion secondary battery, wherein the first powder includes valuable metal powder containing a valuable metal composition of the positive electrode material.

In addition, in the method for recycling a waste lithium-ion secondary battery according to the invention, the first powder may not include an organic component, but may include fluorine in an amount of 2 wt% or less.

In addition, in the method for recycling a waste lithium-ion secondary battery according to the invention, the first powder may not include an organic component and fluorine.

In addition, in the method for recycling a waste lithium-ion secondary battery according to the invention, the valuable metal powder may include Ni and Co, or Fe.

In addition, in the method for recycling a waste lithium-ion secondary battery according to an embodiment of the invention, the valuable metal powder may include Ni and Co in a reduced state.

In addition, the method for recycling a waste lithium-ion secondary battery according to the invention may be characterized in that a gas generated inside the heat-treatment furnace in the step (b) and the step (c) is forcibly exhausted.

In addition, the method for recycling a waste lithium-ion secondary battery according to the invention may be characterized in that the gas is forcibly exhausted by creating a negative pressure state inside the heat-treatment furnace in the step (b) and the step (c).

In addition, the method for recycling a waste lithium-ion secondary battery according to the invention may be characterized in that the gas is forcibly exhausted through a fan disposed in the heat-treatment furnace in the step (b) and the step (c).

In addition, the method for recycling a waste lithium-ion secondary battery according to the invention may be characterized in that the forcibly exhausting of the gas through the fan is intermittently performed.

In addition, in the method for recycling a waste lithium-ion secondary battery according to an embodiment of the invention, the object to be heat-treated in the step (a) may be a positive electrode recovered by disassembling the waste lithium ion battery.

Meanwhile, according to another embodiment of the invention, there is provided valuable metal powder for a positive electrode material recovered by the above-described method for recycling a waste lithium-ion secondary battery according to the invention.

### ADVANTAGEOUS EFFECTS

A method for recycling a waste lithium-ion secondary battery according to the present invention is economical and eco-friendly at the same time, and thus, increases the recycling rate of the waste lithium-ion secondary battery and solves environmental problems which may occur during the recycling.

In addition, it is possible to manufacture a highly economical lithium-ion secondary battery using valuable metal powder for a positive electrode material obtainable according to the present invention.

### BRIEF DESCRIPTION OF THE DRAWINGS

Fig. 1 shows the X-ray diffraction pattern of valuable metal powder recovered according to an embodiment of the invention;
Fig. 2 shows the result of Raman spectrum analysis of valuable metal powder recovered according to an embodiment of the invention;
Fig. 3 shows the result of X-ray fluorescence (XRF) analysis of valuable metal powder recovered according to an embodiment of the invention; and
Fig. 4 shows the image and result of XRF analysis of valuable metal powder treated and recovered according to a comparative example.

### DETAILED DESCRIPTION OF THE EXEMPLARY EMBODIMENTS

Hereinafter, embodiments of the present invention will be described in detail with reference to the accompanying drawings so that those skilled in the art to which the present application pertains may easily practice the embodiments. The present invention may, however, be embodied in many different forms and should not be construed as limited to the embodiments set forth herein.

Throughout the present specification, when a part is referred to as "including" another component, it means the part may further include other components, rather than excluding other components, unless specifically stated otherwise.

The terms "about," "substantially," and the like used herein are used in a sense that is close to a numerical value presented with a manufacturing and material tolerance specific to a stated meaning, and is used to prevent an unscrupulous person from abusing a disclosure in which an exact or absolute value is stated in order to facilitate the understanding of the invention. In addition, the term "a step ~ing," or "a step of ~," as used throughout the specification, does not mean "a step for ~."

Throughout the specification, the term "a combination thereof included in an expression of the Markush form means one or more mixtures or combinations selected from the group consisting of components described in the expression of the Markush form, and means to include one or more selected from the group consisting of the components.

Throughout the present specification, the description of "A and/or B" means "A or B, or A and B."

A method for recycling a waste lithium-ion secondary battery according to an aspect of the invention is characterized by including (a) loading an object to be heat-treated, which is at least a part of a waste lithium-ion secondary battery including a positive electrode material, into a heat-treatment furnace, (b) increasing the temperature inside the heat-treatment furnace to a range of 200 °C to 400 °C, (c) maintaining the increased temperature, and (d) discharging first powder produced after the completion of the heat treatment of the waste lithium-ion secondary battery, wherein the first powder includes valuable metal powder containing a valuable metal composition of the positive electrode material.

In the present invention, a waste lithium-ion secondary battery to be treated for recycling is a waste lithium-ion secondary battery using lithium iron phosphate or a ternary oxide containing nickel and cobalt as a positive electrode material. A waste lithium-ion secondary battery introduced into a heat-treatment furnace may be the whole waste lithium-ion secondary battery cell, or at least a part thereof including a ternary oxide positive electrode material or a positive electrode material to which lithium iron phosphate is applied. In addition, it may be black mass, which is powder produced by disassembling and crushing a waste lithium-ion secondary battery, or it may be a waste lithium-ion secondary battery discarded due to a defects, and so on, during a manufacturing process.

In addition, in an embodiment of the invention, in order to effectively recover a valuable component material of a positive electrode material, a waste lithium-ion secondary battery may be disassembled, and only the positive electrode in which a current collector and a positive electrode material are combined may be separated and introduced into a heat-treatment furnace.

A typical waste lithium-ion secondary battery recycling process includes processes of disassembling a waste lithium-ion battery, pyrolyzing the disassembled battery at a high temperature, turning the pyrolyzed battery into bulk, and then crushing the bulk. As a result, the waste lithium-ion battery is ground in the state of bulk, which includes not only a positive electrode material and a negative electrode material to recover, but also a large amount of impurities including a case, a current collector, and the like, so that the positive electrode material and the negative electrode material do not remain in the state of raw materials and undergo significant deformation.

In comparison, the recycling method according to the invention removes an electrolyte solution through low-temperature heat treatment and decomposes a binder included in a waste lithium-ion battery, so that it is possible to recover valuable metal powder for a positive electrode material, which may become a raw material for a positive electrode material by including a metal component which is a valuable component included in the positive electrode material, with high purity.

The valuable metal powder for a positive electrode material separated as described above may be recycled in the manufacture of a lithium-ion battery after undergoing a simple post-process.

In the above-described recycling method, the heat-treatment process may be performed in the range of 200 °C to 400 °C, or in the range of 200 °C to 350 °C, or 250 °C to 350 °C. By heating a battery at a relatively low temperature, a binder, an electrolyte solution, and the like included in the battery are removed by pyrolysis. Particularly, self-heating may be achieved by components such as a binder, and an electrolyte solution to achieve pyrolysis. Compared to the typical recycling method, heat-treatment is performed at a low temperature, making it possible to reduce energy costs. In addition, due to the low-temperature heat treatment, it is possible to facilitate the recovery of metal components, which are valuable components included in a positive electrode material, and Ni and Co, or Fe may be easily recovered with high purity.

Particularly, through the low-temperature pyrolysis, Ni and Co may be recovered in a reduced metal state. Since the metal components are recovered in a metal state rather than an oxide state, it is possible to convert the same into a precursor, which is a raw materials for producing a positive electrode material, more economically.

Meanwhile, in the step (b) and the step (c) described above, it is preferable that a gas generated inside the heat-treatment furnace is forcibly exhausted.

The important thing about the above-described discharge of a gas is that a gas generated by decomposition during the heat treatment of a binder, an electrolyte solution, and the like contains fluorine, and if the gas containing fluorine remains in the heat-treatment furnace, the gas combines with a positive electrode material, a negative electrode material, and the like to form a mass with a strong bond. If heat-treated powder is combined to form a mass as described above, it is difficult to for the mass to be powdered even through post-processing such as grinding. Therefore, it is important to discharge a fluorine-containing gas fast. However, heat treatment at a high temperature as in the prior art inevitably causes the rapid generation of a gas containing a fluorine component, and accordingly, the gas remains in a heat treatment furnace for a long period of time, which accelerates the aggregation of powder.

In comparison, the waste lithium-ion secondary battery recycling method according to the invention is performed by controlling the decomposition rate of a binder and the like through low-temperature heat treatment, so that the rapid generation of a gas containing a fluorine component is suppressed, thereby maintaining the amount of a generated gas at an appropriate level, and at the same time, the generated gas is forcibly exhausted, thereby minimizing the time during which a gas containing a fluorine component remains in a heat-treatment furnace and preventing the aggregation of powder caused by fluorine.

For the above-described forcibly exhausting of a gas during a heat-treatment process, a negative pressure state may be maintained inside a heat-treatment furnace, and a gas generated by the decomposition of a binder, an electrolyte solution, a separator, and the like caused by the heating of a waste lithium-ion secondary battery in the heat-treatment furnace may be discharged to the outside due to the maintenance of the negative pressure state. In order to maintain the above-described negative pressure state, the heat treatment furnace may have a gas outlet and a pump for maintaining a negative pressure state connected to the outlet.

In addition, the exhausting of the atmosphere inside the furnace may be achieved through a fan disposed in the furnace. Through the fan, it is possible to continuously or intermittently discharge a decomposition gas generated in the heat-treatment furnace. If the discharge amount of the internal atmosphere is too much, it may be difficult to increase and maintain the temperature inside the heat-treatment furnace, so that the discharge may be performed intermittently in conjunction with the internal temperature.

First powder recovered after heat treatment through the above-described waste lithium-ion secondary battery recycling method may not include an organic component and fluorine. Since the first powder does not include an organic component and fluorine due to the complete removal of impurities such as a binder through low-temperature heat treatment and forcible exhaust, a heat-treated waste lithium-ion secondary battery may be easily recovered in a powder state, and may be used for the manufacture of a lithium-ion secondary battery. Here, the absence of fluorine means that the fluorine is not detected in the analysis by X-ray fluorescence spectrometry.

Meanwhile, the above-described first powder may not include an organic component, but may include fluorine in an amount of 2 wt% or less. Even if a small amount of fluorine is included, if the amount thereof is at a predetermined level or lower, it may be possible to recover a waste lithium-ion secondary battery in a powder state without the aggregation of powder.

As described above, the waste lithium-ion secondary battery recycling method according to the invention performs heat treatment on a waste lithium-ion secondary battery at a low temperature, and at the same time, discharges a gas generated during the heat treatment, and thus, may recover a valuable component, which is included in a positive electrode material, in a powder state, which requires no additional process such as grinding, so that it is possible to recycle valuable metal powder including the recovered positive electrode material component for the manufacture of a new battery.

### Example

A waste lithium-ion secondary battery using an NCM positive electrode material was treated according to the recycling method according to the invention to recover first powder.

The waste lithium-ion secondary battery was loaded into a heat-treatment furnace, and then the temperature inside the heat-treatment furnace was adjusted to be 250 °C to heat treat the waste lithium-ion secondary battery. The temperature thereinside was increased at a rate of 1 °C/minute, and then adjusted to be maintained at the increased temperature for 12 hours. The internal atmosphere was discharged through a fan during the reaction, and the internal temperature was maintained in the range of 250±15 °C in conjunction with a temperature sensor. After the reaction was completed, a powdered material was separated and recovered to obtain first powder.

The obtained first powder was added to water and sonicated. The treated solution was allowed to be left to stand for a predetermined period of time to be separated into a precipitate and a floating matter in the solution. Thereafter, the precipitate was collected and dried to recover valuable metal powder.

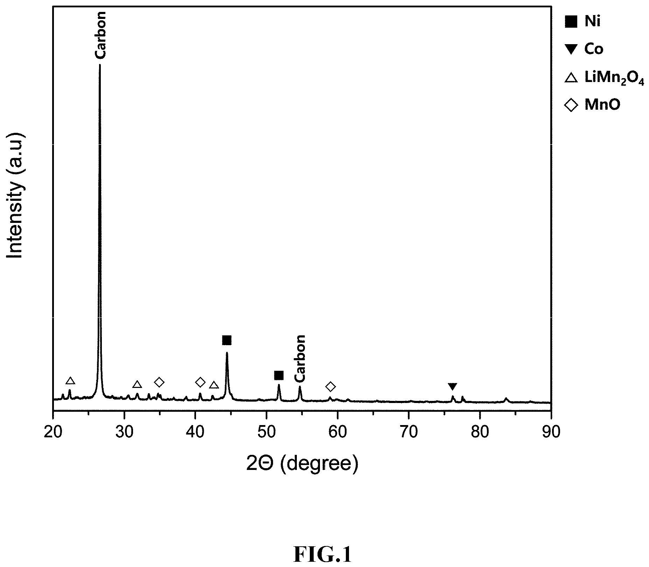

Fig. 1 shows the result of X-ray diffraction analysis of obtained first powder. Ni and Co peaks in a reduced metal state were observed, and diffraction peaks for an Mn oxide and crystalline carbon were observed. This allows Ni and Co, which are representative valuable components of NCM, to be recovered as metal components, and powder recovered in such a metal state makes it possible to manufacture a precursor in a much more economical and eco-friendly manner than processing oxide powder again to produce a precursor for a positive electrode material.

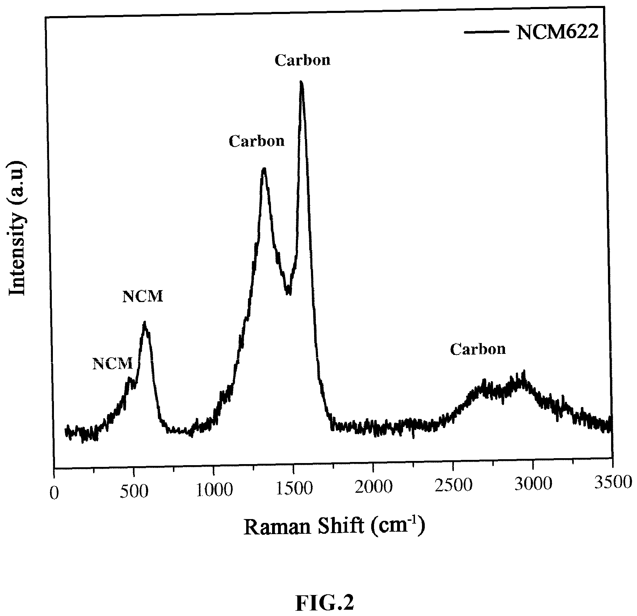

Fig. 2 shows the result of Raman spectrum analysis on the first powder. It can be seen that the powder does not show a peak related to organic matters other than the NCM component and carbon, which indicates that the organic matters are completely removed.

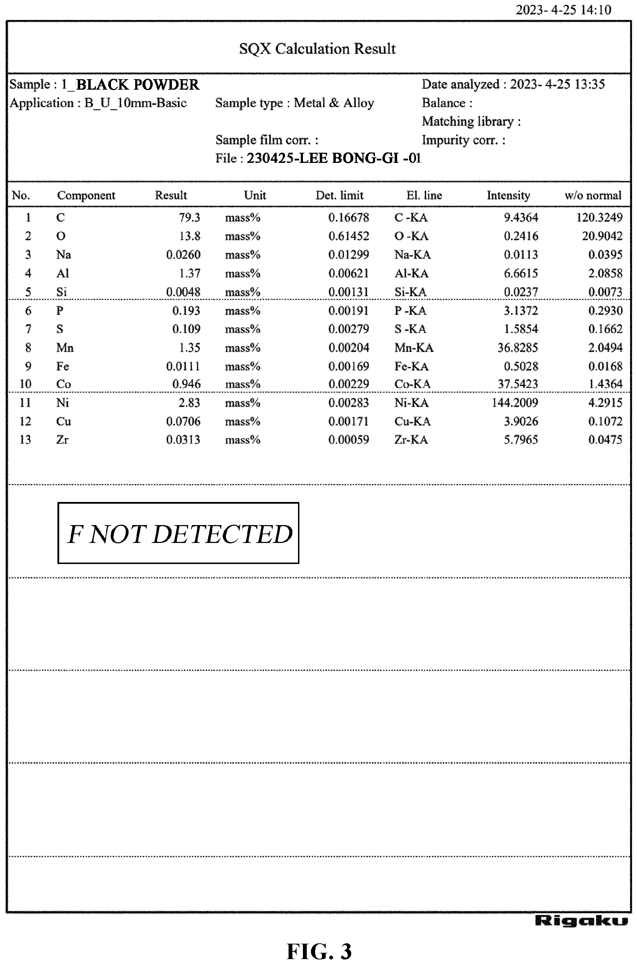

Fig. 3 shows the result of XRF component analysis on the first powder, and it can be seen that hydrofluoric acid was not detected.

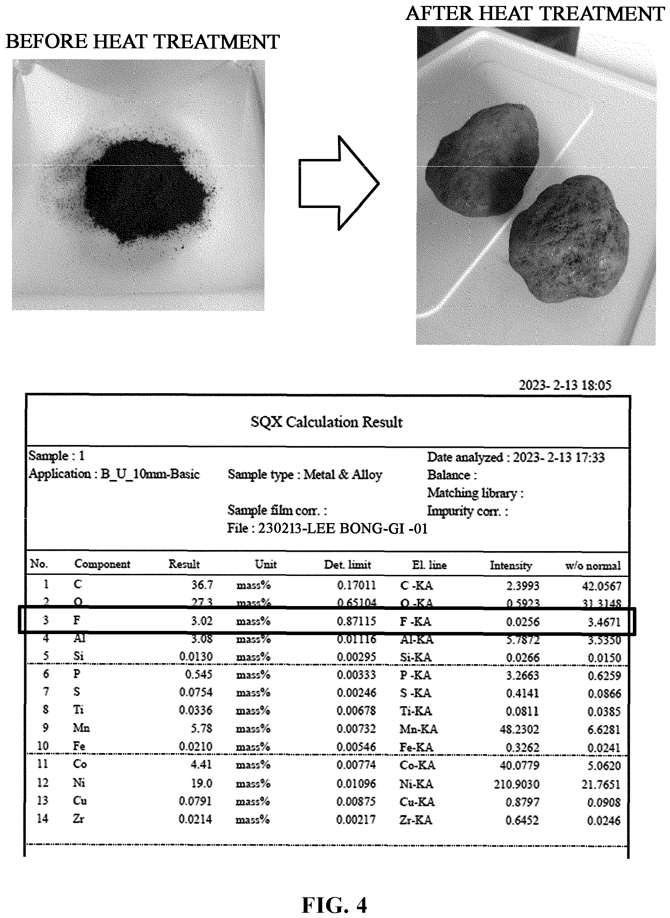

Meanwhile, Fig. 4 shows powder recovered after performing heat treatment on a commercially available black mass at a low temperature without exhausting a gas. The powder recovered as described above is a firm mass, so that it was difficult to grind the same, and a large amount of fluorine was detected therefrom.

## Claims

1. A method for recycling a waste lithium-ion secondary battery, the method comprising:
(a) loading an obj ect to be heat-treated, which is at least a part of a waste lithium-ion secondary battery including a positive electrode material, into a heat-treatment furnace;
(b) increasing the temperature inside the heat-treatment furnace to a range of 200 °C to 400 °C;
(c) maintaining the increased temperature to heat treat the object to be heat-treated; and
(d) discharging first powder produced after the completion of the heat treatment of the waste lithium-ion secondary battery,
wherein the first powder includes valuable metal powder containing a valuable metal composition of the positive electrode material.

2. The method of Claim 1, wherein the first powder does not comprise an organic component, but comprises fluorine in an amount of 2 wt% or less.

3. The method of Claim 1, wherein the first powder does not comprise an organic component and fluorine.

4. The method of one of Claims 1 to 3, wherein the valuable metal powder comprises Ni and Co, or Fe.

5. The method of one of Claims 1 to 4, wherein the valuable metal powder comprises Ni and Co in a reduced state.

6. The method of one of Claims 1 to 5, wherein a gas generated inside the heat-treatment furnace in the step (b) and the step (c) is forcibly exhausted.

7. The method of claim 6, wherein the gas is forcibly exhausted by creating a negative pressure state inside the heat-treatment furnace in the step (b) and the step (c).

8. The method of claim 6 or 7, wherein the gas is forcibly exhausted through a fan disposed in the heat-treatment furnace in the step (b) and the step (c).

9. The method of Claim 8, wherein the forcibly exhausting of the gas through the fan is intermittently performed.

10. The method of one of Claims 1 to 9, wherein the object to be heat-treated in the step (a) is a positive electrode recovered by disassembling the waste lithium ion battery.

11. Valuable metal powder for a positive electrode material recovered by the method for recycling a waste lithium-ion secondary battery according to any one of Claims 1 to 10.
